# DEMANDE DE BREVET EUROPEEN

(11) **EP 3 327 985 A1**
(43) Date de publication de la demande: **30.05.2018**
(21) Numéro de dépôt: 17168081.2
(22) Date de dépôt: 25.04.2017
(51) Int. Cl.: H04L 9/00, G06F 21/75

(54) **BROUILLAGE DU FONCTIONNEMENT D'UN CIRCUIT INTÉGRÉ**

(30) Priorité: 28.11.2016 FR 1661562
(71) Demandeur: PROTON WORLD INTERNATIONAL N.V., 1831 Diegem (BE); STMICROELECTRONICS (ROUSSET) SAS, 13790 Rousset (FR)
(72) Inventeur: MODAVE, Jean-Louis, 1340 Ottignies (BE); MARINET, Fabrice, 13790 Chateauneuf Le Rouge (FR); PEETERS, Michael, 1320 Tourinnes-La-Grosse (BE)
(74) Mandataire: Cabinet Beaumont

(57) **Abrégé**

L'invention concerne un procédé de protection d'au moins une fonction (3) d'un circuit intégré contre des attaques par canaux cachés, dans lequel une configuration de la fonction est modifiée, une configuration courante (CFG[i]) étant choisie parmi un ensemble de configurations et la durée d'application des différentes configurations changeant d'une configuration à l'autre.

## Description

### Domaine

La présente description concerne de façon générale les circuits électroniques et, plus particulièrement, les circuits exécutant des opérations que l'on souhaite masquer. La présente description concerne plus particulièrement le brouillage du fonctionnement d'un circuit intégré contre des attaques par canaux cachés.

### Exposé de l'art antérieur

Des circuits intégrés peuvent comprendre des circuits ou des informations (dites secrètes) qui sont considérés comme sensibles au vu de la sécurité des données qu'ils traitent, comme des clés d'authentification, des signatures, etc., ou des algorithmes qu'ils utilisent, comme des algorithmes de chiffrement ou de déchiffrement. De telles informations ne doivent pas être communiquées ni être détectables par des tiers ou par des circuits non autorisés.

Les techniques d'analyse du fonctionnement d'un circuit intégré sont de plus en plus performantes et les pirates (hackers) bénéficient de techniques d'analyses de plus ou plus poussées. En particulier, les attaques par canaux cachés (analyse de la consommation du circuit, de son rayonnement électromagnétique, etc.) sont de plus en plus performantes. Parmi ces attaques, les attaques dites temporelles (synchronisation attacks) cherchent à détecter des instants particuliers de fonctionnement d'une unité de traitement afin de pouvoir ensuite caler temporellement d'autres attaques.

### Résumé

Il existe un besoin d'améliorer la protection d'informations secrètes manipulées par un circuit électronique.

Il existe également un besoin qui soit plus particulièrement adapté à contrer des attaques temporelles d'une unité de traitement.

Un mode de réalisation pallie tout ou partie des inconvénients des techniques connues de protection d'information manipulées par un circuit intégré.

Un mode de réalisation prévoit plus particulièrement une contremesure à des attaques temporelles.

Ainsi, un mode de réalisation prévoit un procédé de protection d'au moins une fonction d'un circuit intégré contre des attaques par canaux cachés, dans lequel une configuration de la fonction est modifiée régulièrement, une configuration courante étant choisie parmi un ensemble de configurations et la durée d'application des différentes configurations changeant d'une configuration à l'autre.

Selon un mode de réalisation, la sélection des configurations est séquentielle.

Selon un mode de réalisation, la sélection de la configuration courante est aléatoire.

Selon un mode de réalisation, une information de sélection est combinée avec un masque choisi aléatoirement pour fournir la sélection de la configuration courante.

Selon un mode de réalisation, le masque change à chaque fois que toutes les configurations ont été utilisées avec le masque courant.

Selon un mode de réalisation, la sélection de la durée d'application dépend également du masque.

Un mode de réalisation prévoit un module de protection d'au moins une fonction d'un circuit intégré, comportant :
un sélecteur d'une information de configuration de la fonction parmi plusieurs configurations différentes ; et
un circuit de commande du sélecteur, dans lequel la sélection de la configuration appliquée à la fonction change régulièrement et la durée d'application des différentes configurations change d'une configuration à l'autre.

Selon un mode de réalisation, la durée d'application est sélectionnée dans une table mémorisée de durées d'application, de préférence en même nombre que le nombre de configurations.

Selon un mode de réalisation, les différentes informations de configuration sont stockées dans des registres.

Selon un mode de réalisation, le module est intercalé sur le trajet d'un signal de configuration de la fonction.

Selon un mode de réalisation, la fonction est une contremesure contre une analyse de la consommation du circuit par canaux cachés.

Selon un mode de réalisation, la fonction est l'horloge d'une unité de traitement du circuit intégré.

Selon un mode de réalisation, la configuration modifie le séquencement des opérations de la fonction.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, de façon très schématique et sous forme de blocs, un mode de réalisation d'un circuit électronique du type auquel s'appliquent, à titre d'exemple, les modes de réalisation décrits ;
la figure 2 représente, de façon très schématique et sous forme de blocs, un mode de réalisation d'un module de protection du circuit de la figure 1 ;
la figure 3 représente, de façon plus détaillée, un mode de réalisation d'un module de protection ; et
la figure 4 est un schéma-bloc simplifié illustrant le fonctionnement du mode de réalisation de la figure 3.

### Description détaillée

De mêmes éléments ont été désignés par de mêmes références aux différentes figures.

Par souci de clarté, seuls les étapes et éléments utiles à la compréhension des modes de réalisation qui vont être décrits ont été représentés et seront détaillés. En particulier, d'autres aspects, comme les fonctions de calcul particulières exécutées, n'ont pas été décrites en détail, puisqu'il sera clair pour l'homme de l'art que les modes de réalisation décrits ici peuvent s'appliquer à une grande gamme de fonctions de calcul, pour des applications cryptographiques ou d'autres types d'applications.

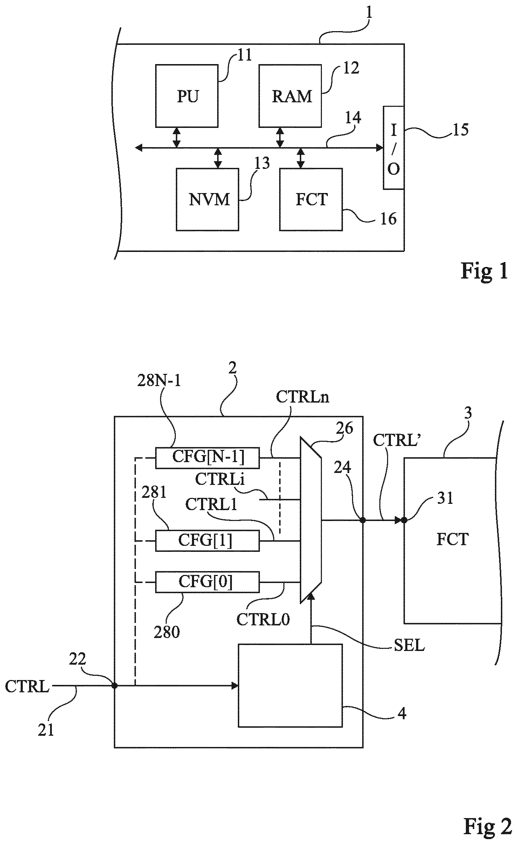

La figure 1 représente, de façon très schématique et sous forme de blocs, un mode de réalisation d'un circuit électronique 1 du type auquel s'appliquent, à titre d'exemple, les modes de réalisation qui vont être décrits.

Le circuit 1 comporte :
une ou plusieurs unités de traitement 11 (PU), par exemple une machine d'états, un microprocesseur, un circuit logique programmable, etc. ;
une ou plusieurs zones 12 (RAM) de stockage volatile, par exemple de type mémoire RAM ou registres, pour stocker temporairement des informations (instructions, adresses, données) pendant les traitements ;
une ou plusieurs zones 13 (NVM) de stockage non volatile (par exemple de type flash) pour stocker des informations de façon durable et en particulier quand le circuit n'est pas alimenté ;
un ou plusieurs bus 14 de données, d'adresses et/ou de commandes entre les différents éléments internes au circuit 1 ; et
une ou plusieurs interfaces d'entrée-sortie 15 (I/O) de communication, par exemple de type bus série, avec l'extérieur du circuit 1. Le cas échéant, le circuit 1 intègre également un circuit de communication sans contact (CLF - ContactLess Front-end), de type communication en champ proche (Near Field Communication - NFC).

Par ailleurs, le circuit 1 peut intégrer d'autres fonctions selon l'application, par exemple, un crypto-processeur, d'autres interfaces, d'autres mémoires, etc., symbolisées par un bloc 16 (FCT) en figure 1.

L'activité du circuit 1 se traduit par des variations du courant consommé et des radiations électromagnétiques engendrées par le fonctionnement. Ces variations sont susceptibles de fournir des renseignements sur certains traitements opérés par le circuit et notamment sur les instants de ces traitements. L'exploitation de ces traces d'activité par des attaques temporelles permet d'identifier des opérations particulières, comme par exemple des opérations d'écriture en mémoire flash, et de cibler par la suite d'autres attaques permettant de percer les secrets manipulés par le circuit.

On a déjà proposé des solutions désynchronisant le fonctionnement d'un circuit électronique. Des solutions matérielles introduisant des cycles de fonctionnement fictifs au niveau du processeur permettent un décalage temporel (jitter) des opérations sensibles d'une exécution à une autre. Toutefois, ces décalages restent locaux au niveau du processeur et s'avèrent inefficaces contre les nouvelles techniques d'analyses de la consommation et du rayonnement qui permettent de surveiller les variations au niveau, par exemple, des accès mémoire. Des solutions logicielles génèrent des interruptions à l'aide du code (programme) pour désynchroniser les opérations. Toutefois, de telles solutions sont incompatibles avec le stockage du code et des données dans des mémoires de type flash car ces interruptions déterminées par le code stocké en mémoire flash provoqueraient des conflits d'adresses avec les opérations d'écriture et d'effacement des données dans cette mémoire.

Les modes de réalisation décrits prévoient un module matériel additionnel, intercalé sur le trajet d'un signal de configuration d'au moins une fonction matérielle (typiquement un module du circuit, par exemple son unité de traitement, son interface mémoire, etc.), afin de modifier régulièrement cette configuration. L'intervention sur le signal provoque, directement ou indirectement, un brouillage ou une désynchronisation des opérations de la fonction matérielle concernée. En fait, le module modifie, selon la fonction concernée, le paramétrage ou le séquencement de cette fonction.

Par exemple, le signal est le signal d'horloge de l'unité de traitement et la fonction est cette unité de traitement elle-même.

Selon un autre exemple, le signal est un signal de configuration du signal d'horloge de l'unité de traitement et la fonction est l'unité de traitement. Le signal de configuration correspond, par exemple, à fixer un pourcentage à appliquer au signal d'horloge pour en modifier la période.

Selon un autre exemple de réalisation, dans lequel une contremesure consiste à intercaler des instructions factices dans un flux d'instructions véhiculé sur un bus, le signal est un signal de configuration du nombre ou du pourcentage d'instructions factices envoyées sur le bus, ce qui désynchronise les opérations du circuit recevant les instructions factices, par exemple, une unité de traitement, un contrôleur mémoire, un périphérique, etc.

Selon encore un autre exemple de réalisation, dans lequel une contremesure consiste à générer du bruit sur un bus d'alimentation ou d'horloge, le signal est un signal paramétrant le taux ou pourcentage de bruit.

D'autres signaux peuvent être traités selon les applications et les contremesures envisagées.

La figure 2 représente, de façon très schématique et sous forme de blocs, un mode de réalisation d'un module de protection du circuit de la figure 1.

Le module 2 de protection intercepte un signal CTRL de configuration véhiculé par un ou plusieurs conducteurs 21. Le signal CTRL peut être analogique ou numérique. En l'absence du module 2, le ou les conducteurs 21 sont connectés à une ou plusieurs bornes 31 d'une fonction 3 (FCT) contrôlée par le signal CTRL. Ici, le ou les conducteurs 21 sont connectés à une ou plusieurs bornes d'entrée 22 du module 2, et un signal de remplacement ou modifié CTRL' est fourni par une ou plusieurs bornes 24 de sortie du module 2, connectées à la ou aux bornes d'entrée 31. Le module 2 comporte un circuit 4 commandant un sélecteur 26 (multiplexeur) fournissant le signal CTRL' sélectionné parmi plusieurs (N) signaux CTRLi (i compris entre 0 et N-1) de configuration appliqués sur les N entrées du sélecteur 26. Les signaux CTRLi peuvent être générés directement par le circuit 2, par exemple s'il s'agit de mots de configuration contenus dans des registres 28 (280 - CFG[0], 281 - CFG[1], 28i - CFG[i], 28N-1 - CFG[N-1]), ou correspondre à des traitements différents appliqués au signal CTRL (liaison en pointillés en figure 2). Par exemple, le traitement est une modification directe de la période d'un signal d'horloge.

Le rôle du circuit 4 est de générer un signal SEL de commande du multiplexeur 26 afin de changer régulièrement le rang i du signal CTRLi sélectionné comme signal de configuration CTRL'. Le changement est, de préférence, non périodique, c'est-à-dire que le circuit 4 modifie le rang i de façon non périodique. La durée, pendant laquelle une configuration est maintenue, peut être aléatoire ou correspondre à des durées mémorisées et différentes pour chaque configuration, le cas échéant combinées à un masque aléatoire ou non.

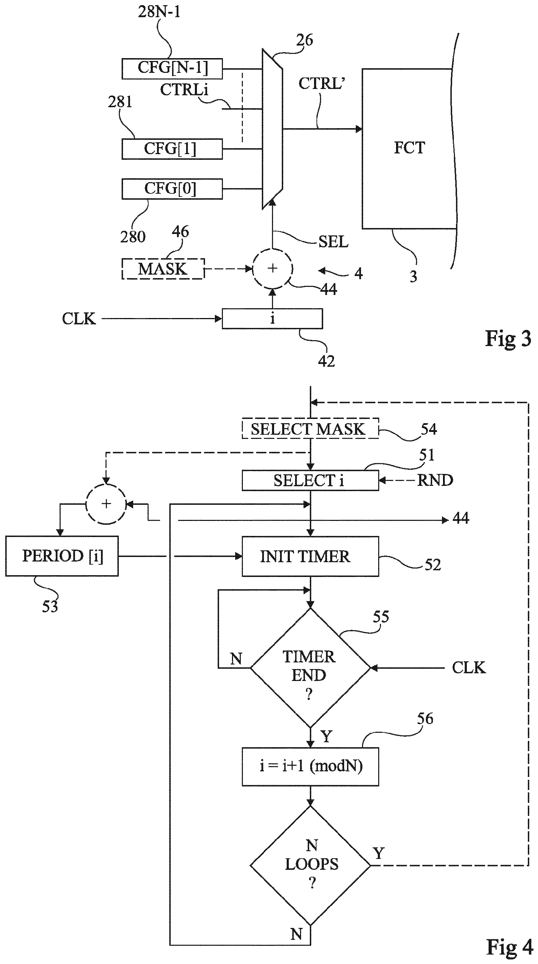

La figure 3 représente, de façon plus détaillée, un mode de réalisation d'un module de protection, ici un module de désynchronisation, des opérations de la fonction à protéger.

Le circuit 4 comporte un circuit 42 de pré-sélection du rang i de la configuration CFG[i] à appliquer. Dans cet exemple, ce circuit 4 reçoit un signal d'horloge ou de séquencement CLK non brouillé. Le circuit 4 comporte également, de préférence, un élément 44 de combinaison (typiquement un OU-Exclusif ou addition bit à bit) du rang i fourni par le circuit 42 avec un masque MASK, par exemple sélectionné aléatoirement, stocké dans un registre 46. Les éléments 44 et 46 sont représentés en pointillés pour insister sur leur caractère optionnel. Le résultat de la combinaison fourni le signal SEL de sélection de la configuration CFG à sélectionner par le sélecteur 28i.

Selon cet exemple, le signal de sortie CTRL' du sélecteur 26 est un mot de configuration d'un signal de séquencement ou d'horloge de la fonction 3, par exemple de l'unité de traitement 11 du circuit 1. Le mot de configuration est par exemple un pourcentage de variation de la période du signal d'horloge CLK.

La figure 4 est un schéma-bloc simplifié illustrant le fonctionnement d'un mode de réalisation du circuit 42 de la figure 3.

Le principe est de modifier régulièrement le rang i fourni au sélecteur 26 ou au combineur 44.

On commence par sélectionner une valeur pour le rang i (bloc 51, SELECT i). Cette sélection dans l'ensemble des N valeurs possibles pour le rang i s'effectue soit en prenant la première valeur (i=0), soit par sélection aléatoire sur la base d'un nombre aléatoire RND.

Le rang i sélectionné est fourni au sélecteur 26 ou au combineur 44 en même temps qu'un compteur temporel (timer) est initialisé (bloc 52, INIT TIMER). Le rôle du compteur temporel est de fixer la durée d'application du rang i, c'est-à-dire la durée d'application de la configuration CFG[i] à la fonction 3. La valeur du compteur est, de préférence, différente pour chaque rang i. Par exemple, une table de valeurs des différentes durées est stockée en mémoire et la durée PERIOD[i] est lue (bloc 53) dans cette table lors de la sélection. Cette durée PERIOD[i] paramètre le compteur temporel 52.

Dans un mode de réalisation, chaque période est affectée à une configuration. Dans ce cas, l'ensemble des rangs (configuration plus période) est parcouru dans un ordre rendu aléatoire par l'application d'un masque (le masque MASK). Pour cela (pointillés en figure 4), on sélectionne ou génère un masque (bloc 54, SELECT MASK), par exemple un nombre aléatoire, et on l'additionne (combinaison OU-Exclusif) au rang i fourni à la table 53 pour sélectionner la période ou durée PERIOD[i+MASK] d'application de la configuration CFG[i+MASK].

Par exemple au rythme de l'horloge CLK (ou avec une autre périodicité) on vérifie (bloc 55, TIMER END ?) si le seuil du compteur temporel est atteint. Lorsque c'est le cas (sortie Y du bloc 55), on incrémente la valeur du rang i, modulo N (bloc 56, i=i+1 (mod N)). La nouvelle valeur devient la valeur fournie au combineur 44 et on revient à l'étape 52 d'initialisation du compteur temporel. Sinon (sortie N du bloc 55), on conserve la configuration courante.

Dans le cas où l'on utilise un masque MASK, on teste (bloc 57, N LOOPs ?) de préférence le nombre de boucles effectuées, c'est-à-dire le nombre d'utilisations du masque MASK. Une fois qu'un même masque a été utilisé N fois (sortie Y du bloc 57), c'est-à-dire a servi pour toutes les valeurs de i, on revient au bloc 54 pour sélectionner un autre masque.

Ainsi, les N configurations CFG[i] sont appliquées à tour de rôle avec des durées d'applications différentes.

Dans un autre mode de réalisation, les périodes et configurations sont sélectionnées de manière indépendante, par exemple par deux masques différents. Dans ce cas, la durée d'application d'une même configuration change à chaque fois dans la mesure où le masque est différent.

On notera que, même avec un circuit 4 prévu pour appliquer un masque de brouillage, on peut parcourir les configurations séquentiellement. Il suffit de forcer ce masque à zéro et les configurations sont alors parcourues toujours dans le même ordre. Si l'on souhaite ne plus brouiller ou protéger la fonction, on peut par exemple arrêter la boucle de sélection et la même configuration est appliquée en permanence, ou mettre la même configuration dans tous les registres 28.

Un avantage des modes de réalisation qui ont été décrits est qu'ils permettent de masquer le fonctionnement d'une fonction d'un circuit.

Un autre avantage est que la solution décrite est compatible avec une protection des durées d'effacement et d'écriture d'une mémoire flash.

Divers modes de réalisation ont été décrits. Diverses variantes et modifications apparaîtront à l'homme de l'art. Enfin, la mise en oeuvre pratique des modes de réalisation qui ont été décrits est à la portée de l'homme du métier à partir des indications fonctionnelles données ci-dessus. Par ailleurs, bien que la description ci-dessus utilise un vocabulaire correspondant à une implémentation matérielle, une réalisation logicielle est possible.

## Revendications

1. Procédé de protection d'au moins une fonction (3) d'un circuit intégré (1) contre des attaques par canaux cachés, dans lequel une configuration de la fonction est modifiée, une configuration courante (CFG[i]) étant choisie parmi un ensemble (N) de configurations (CFG) et la durée (PERIOD) d'application des différentes configurations changeant d'une configuration à l'autre.

2. Procédé selon la revendication 1, dans lequel la sélection (SEL) des configurations (CFG) est séquentielle.

3. Procédé selon la revendication 1, dans lequel la sélection (SEL) de la configuration courante (CFG[i]) est aléatoire.

4. Procédé selon la revendication 3, dans lequel une information (i) de sélection est combinée avec un masque (MASK) choisi aléatoirement pour fournir la sélection (SEL) de la configuration courante (CFG[i]).

5. Procédé selon la revendication 4, dans lequel le masque (MASK) change à chaque fois que toutes les configurations (CFG) ont été utilisées avec le masque courant.

6. Procédé selon la revendication 4 ou 5, dans lequel la sélection de la durée d'application (PERIOD) dépend également du masque (MASK).

7. Module (2) de protection d'au moins une fonction (3) d'un circuit intégré (1), comportant :
un sélecteur (26) d'une information de configuration de la fonction parmi plusieurs (N) configurations différentes (CFG) ; et
un circuit (4) de commande du sélecteur, dans lequel la sélection de la configuration (CFG[i]) appliquée à la fonction change et la durée (PERIOD) d'application des différentes configurations change d'une configuration à l'autre.

8. Module selon la revendication 7, dans lequel la durée d'application (PERIOD) est sélectionnée dans une table (53) mémorisée de durées d'application, de préférence en même nombre que le nombre de configurations (CFG).

9. Module selon la revendication 7 ou 8, dans lequel les différentes informations de configuration sont stockées dans des registres (28).

10. Module selon l'une quelconque des revendications 7 à 9, dans lequel le module (2) est intercalé sur le trajet d'un signal (CTRL) de configuration de la fonction (3).

11. Procédé selon l'une quelconque des revendications 1 à 6 ou module selon l'une quelconque des revendications 7 à 10, dans lequel la fonction (3) est une contremesure contre une analyse de la consommation du circuit (1) par canaux cachés.

12. Procédé selon l'une quelconque des revendications 1 à 6 ou module selon l'une quelconque des revendications 7 à 10, dans lequel la fonction (3) est l'horloge d'une unité de traitement (11) du circuit intégré (1).

13. Procédé selon l'une quelconque des revendications 1 à 6 ou module selon l'une quelconque des revendications 7 à 10, dans lequel la configuration (CFG) modifie le séquencement des opérations de la fonction (3).
